# EUROPÄISCHE PATENTANMELDUNG

(11) **EP 4 286 241 A1**
(43) Veröffentlichungstag der Anmeldung: **06.12.2023**
(21) Anmeldenummer: 23172568.0
(22) Anmeldetag: 10.05.2023
(51) Int. Cl.: B61L 15/00, G06T 7/70, B61L 25/04

(54) **FAHRGASTZÄHLSYSTEM UND ÜBERWACHUNGSVERFAHREN**

(30) Priorität: 30.05.2022 DE 102022205398
(71) Anmelder: Siemens Mobility GmbH, 81739 München (DE)
(72) Erfinder: Heilmann, Peter, 90574 Roßtal (DE); Wolf, Günter, 90425 Nürnberg (DE)
(74) Vertreter: Siemens Patent Attorneys

(57) **Zusammenfassung**

Die Erfindung betrifft ein Verfahren (V) zur automatisierten Überwachung von Fahrgastzählsystemen (1) in Fahrzeugen (10), ein Fahrgastzählsystem (1) sowie ein Computerprogrammprodukt. Dabei wird ein Türbereich (11) eines Fahrzeugs (10) mithilfe einer Sensorvorrichtung (2) eines Fahrgastzählsystems (1) erfasst (S1) und entsprechende Sensordaten (D) erzeugt. Zweckmäßigerweise wird auch eine Sensorkonfiguration (K) der Sensorvorrichtung (2) ermittelt (S2). Die Sensordaten (D) werden mit Referenzdaten, die eine Soll-Charakterisierung des Türbereichs (11) repräsentieren, verglichen (S3a). Zudem wird die Sensorkonfiguration (K) mit einer Referenzkonfiguration, die eine Soll-Charakterisierung der Sensorvorrichtung (2) repräsentiert, verglichen (S3b). Ein Ergebnis des Vergleichs wird ausgegeben (S5, S7, S8).

## Beschreibung

Die vorliegende Erfindung betrifft ein Verfahren zur automatisierten Überwachung von Fahrgastzählsystemen in Fahrzeugen, ein Fahrgastzählsystem sowie ein Computerprogrammprodukt.

Zur automatischen Erhebung von Fahrgastzahlen im öffentlichen Personennah- oder -fernverkehr, beispielsweise in Schienenfahrzeugen, sind Fahrgastzählsysteme bekannt. Anhand der Fahrgastzahlen können Betreiber beispielsweise den Einsatz ihrer Fahrzeuge optimieren. Haben sich mehrere solcher Betreiber zu einem Verkehrsverbund zusammengeschlossen, ist es anhand der Fahrgastzahlen auch möglich, Erlöse zwischen den Betreibern aufzuteilen.

Dabei wird üblicherweise großen Wert auf die Zuverlässigkeit und Präzision der entsprechenden Fahrgastzählsysteme gelegt. Entsprechende Anforderungen sind häufig in Verträgen oder Normen hinterlegt, deren Erfüllung zum Beispiel bei der Inbetriebnahme eines Fahrgastzählsystems verifiziert werden müssen.

Es ist eine Aufgabe der vorliegenden Erfindung, das Zählen von Fahrgästen zu verbessern, insbesondere Änderungen der Zählgenauigkeit eines Fahrgastzählsystems möglichst frühzeitig zu erkennen und/oder eine erkannte Verminderung der Zählgenauigkeit zu beheben.

Diese Aufgabe wird gelöst durch ein Verfahren zur automatisierten Überwachung von Fahrgastzählsystemen in Schienenfahrzeugen, ein Fahrgastzählsystem sowie ein Computerprogrammprodukt gemäß den unabhängigen Ansprüchen.

Bevorzugte Ausführungsformen sind Gegenstand der Unteransprüche und der folgenden Beschreibung.

Bei einem Verfahren zur automatisierten Überwachung von Fahrgastzählsystemen in Fahrzeugen, insbesondere Schienenfahrzeugen, gemäß dem ersten Aspekt der Erfindung wird ein Türbereich eines Fahrzeugs mithilfe einer Sensorvorrichtung eines Fahrgastzählsystems erfasst. Dabei werden entsprechende Sensordaten erzeugt. Zweckmäßigerweise wird auch eine Sensorkonfiguration der Sensorvorrichtung ermittelt. Die Sensordaten werden mit Referenzdaten, die eine Soll-Charakterisierung des Türbereichs repräsentieren, verglichen. Zudem wird die Sensorkonfiguration mit einer Referenzkonfiguration, die eine Soll-Charakterisierung der Sensorvorrichtung repräsentiert, verglichen. Ein Ergebnis des Vergleichs wird ausgegeben.

Eine Sensorkonfiguration im Sinne der Erfindung ist vorzugsweise eine Hard-, Soft- und/oder Firmwareeinstellung eines Sensors. Die Sensorkonfiguration kann dabei vorgeben, wie und/oder welche Objekte sensorisch erfasst und/oder Daten dabei erzeugt, insbesondere verarbeitet, werden. Beispielsweise kann die Sensorkonfiguration vorgeben, welche Signale in Roh- oder verarbeiteter Form als Sensordaten des Sensors ausgegeben werden. Eine Referenzkonfiguration kann eine vorgegebene Sensorkonfiguration sein.

Eine Soll-Charakterisierung im Sinne der Erfindung ist vorzugsweise eine vorgegebene Beschreibung eines physischen oder virtuellen Objekts oder einer Geometrie, insbesondere eines Türbereichs oder einer Sensorvorrichtung. Eine Soll-Charakterisierung gibt beispielsweise vor, welche Eigenschaften das Objekt oder die Geometrie aufweisen soll und gegebenenfalls auch, wie diese Eigenschaften miteinander in Beziehung stehen. Zum Beispiel können charakteristische Merkmale eines Türbereichs oder einer Sensorvorrichtung in einer Soll-Charakterisierung in einer spezifischen Form beschrieben sein oder eine spezifische Ausprägung haben. So kann einer Soll-Charakterisierung eines Türbereichs eine spezifische, insbesondere vorgegebene, Perspektive zugrunde liegen. Einer Soll-Charakterisierung einer Sensorvorrichtung kann eine spezifische, insbesondere vorgegebene, Weise der (internen) Signalverarbeitung zugrunde liegen.

Ein Aspekt der Erfindung basiert auf dem Ansatz, eine Referenzinformation vorzuhalten oder vorzubereiten, mit der eine Sensorinformation im laufenden Betrieb eines Fahrgastzählsystems, insbesondere automatisiert, verglichen werden kann. Die Referenzinformation beschreibt dabei zweckmäßigerweise einen Sollzustand des Fahrgastzählsystems, insbesondere einer Sensorvorrichtung des Fahrgastzählsystems. Werden Abweichungen festgestellt, kann dies ein Indiz dafür sein, dass eine Zählgüte, d. h. eine etwa über die Präzision und Zuverlässigkeit definierte Qualität einer Zählung, abgenommen hat. Entsprechend lässt sich ein Benutzer informieren und/oder entsprechende Gegenmaßnahmen einleiten.

Dabei ist eine besonders hohe Überwachungszuverlässigkeit erzielbar, indem einerseits bei der Erfassung eines Türbereichs erzeugte Sensordaten mit entsprechenden Referenzdaten und andererseits eine ermittelte Sensorkonfiguration mit einer entsprechenden Referenzkonfiguration verglichen wird. So können zum Beispiel physische Änderungen an einer Sensorvorrichtung des Fahrgastzählsystems, etwa aufgrund einer Alterung, einer Neuinstallation oder eines sog. "Refurbishments", registriert werden. Ebenso lassen sich aber auch Unregelmäßigkeiten bei Software- oder Firmwareupdates, welche die Funktionalität der Sensorvorrichtung beeinträchtigen, registrieren. Der kombinierte Vergleich der Sensordaten mit den Referenzdaten und der Sensorkonfiguration mit der Referenzkonfiguration erlaubt es in manchen Ausgestaltungen des Verfahrens insbesondere, die Konfiguration der Sensorvorrichtung derart anzupassen, dass ihre ursprüngliche Zählgenauigkeit wiederhergestellt wird.

Es ist des Weiteren vorteilhaft, dass durch dieses Verfahren eine Überprüfung der korrekten Konfiguration des Fahrgastzählsystems, insbesondere der Sensorvorrichtung, nicht mehr händisch - und entsprechend mit hohem Personal- und Zeitaufwand - durchgeführt werden muss. Vielmehr kann diese Überprüfung automatisiert im Hintergrund, insbesondere sogar während dem Betrieb des Fahrzeugs und/oder Fahrgastzählsystems, durchgeführt werden. Insofern kann die Überprüfung im Wesentlichen permanent oder auch regelmäßig, zum Beispiel täglich oder monatlich, durchgeführt werden und erkannte Defizite zeitnah und gegebenenfalls automatisch behoben werden. Das Verfahren erleichtert auch den Nachweis bzw. das Protokollieren der ordnungsgemäßen Funktion des Fahrgastzählsystems.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird mithilfe der Sensorvorrichtung ein Bild des Türbereichs erzeugt und das Bild mit einem Referenzbild, welches den Türbereich, insbesondere aus einer vorgegebenen Perspektive, abbildet, verglichen. Zu diesem Zweck weist die Sensorvorrichtung vorzugsweise eine optische Sensoreinrichtung auf, etwa eine Stereokamera. Mit der Sensorvorrichtung können so Bilder des Türbereichs aufgenommen und miteinander, insbesondere mit dem Referenzbild, verglichen werden. Änderungen in den aufgenommenen Bildern können mit bekannten Algorithmen zur Bildverarbeitung besonders schnell und präzise erkannt werden. Insbesondere können durch den Vergleich von Bildern Perspektivänderungen, die Einfluss auf die Zählgüte haben und andernfalls unentdeckt bleiben könnten, ermittelt werden.

Insofern ist es besonders vorteilhaft, wenn beim Vergleichen des Bilds mit dem Referenzbild ein perspektivischer Übereinstimmungsgrad des Bilds mit dem Referenzbild ermittelt wird. Ein perspektivischer Übereinstimmungsgrad ist hierbei vorzugsweise ein Maß für die Übereinstimmung der Perspektive, aus welcher der Türbereich von der Sensorvorrichtung erfasst wird.

In einer weiteren bevorzugten Ausführungsform werden die Sensordaten und die Sensorkonfiguration fahrzeugseitig bereitgestellt und an eine zentrale, landseitige Vergleichsvorrichtung übermittelt, wo der Vergleich vorgenommen wird. Anders gesagt wird die Sensorinformation fahrzeugseitig bereitgestellt, zum Beispiel erzeugt oder ausgelesen, und landseitig mit der Referenzinformation verglichen. Dadurch kann aufwandsarm eine spezialisierte Vergleichsvorrichtung eingesetzt werden, welche sich effizient zur Überwachung mehrerer Fahrgastzählsysteme verschiedener Fahrzeuge nutzen lässt.

Alternativ es ist jedoch auch denkbar, dass der Vergleich fahrzeugseitig vorgenommen wird. Zu diesem Zweck kann das Fahrgastzählsystem oder das Fahrzeug eine entsprechende Vergleichsvorrichtung aufweisen. Durch den fahrzeugseitigen Vergleich lässt sich Infrastruktur einsparen.

In einer weiteren bevorzugten Ausführungsform wird das ausgegebene Ergebnis des Vergleichs gespeichert und einer Zertifizierung des Fahrgastzählsystems zugrunde gelegt. Anders gesagt kann das Vergleichsergebnis in eine Speichervorrichtung ausgegeben werden. Dies erlaubt es, einen vorschriftsmäßigen oder vertragsgerechten Betrieb des Fahrgastzählsystems, wie er zum Beispiel in einer Norm dokumentiert ist, auch zu einem späteren Zeitpunkt und/oder über einen längeren Zeitraum nachzuweisen.

In einer weiteren bevorzugten Ausführungsform wird beim Vergleichen der Sensordaten und/oder der Sensorkonfiguration einerseits mit den Referenzdaten bzw. der Referenzkonfiguration andererseits ein Übereinstimmungsgrad ermittelt und zumindest als Teil des Ergebnisses des Vergleichs ausgegeben. Ein Übereinstimmungsgrad ist hierbei vorzugsweise ein Maß für die Übereinstimmung der Sensordaten mit den Referenzdaten und/oder der Sensorkonfiguration mit der Referenzkonfiguration. Anhand des Übereinstimmungsgrads kann besonders leicht über ein weiteres Vorgehen entschieden werden, zum Beispiel ob eine Neukonfiguration der Sensorvorrichtung notwendig ist oder nicht. Gegebenenfalls kann aus dem Übereinstimmungsgrad auch ein Wert für die Abnahme der Zählgenauigkeit abgeleitet werden.

Beispielsweise wird geprüft, ob der ermittelte Übereinstimmungsgrad einen vorgegebenen Übereinstimmungsschwellenwert erreicht oder unterschreitet. Zur Ausgabe des Vergleichsergebnisses kann dann wenigstens eine von mehreren Schnittstellen auf Grundlage eines Ergebnisses der Prüfung ausgewählt werden. So lässt sich etwa der Übereinstimmungsgrad bei Überschreitung des Übereinstimmungsschwellenwerts durch Ausgabe an eine Speichervorrichtung protokollieren. Beim Erreichen oder Unterschreiten des Übereinstimmungsschwellenwerts kann dagegen automatisiert eine Überarbeitung des Fahrgastzählsystems, insbesondere eine Neu- oder Umkonfiguration der Sensorvorrichtung, veranlasst werden. Dabei ist es auch denkbar, die Überarbeitung des Fahrgastzählsystems auf Grundlage des ermittelten Übereinstimmungsgrads zu priorisieren.

Insofern ist es besonders vorteilhaft, wenn auf Grundlage des ausgegebenen Ergebnisses des Vergleichs die Sensorkonfiguration der Sensorvorrichtung modifiziert wird. Beispielsweise werden Parameter der Sensorkonfiguration geändert oder eine neue Sensorkonfiguration auf die Sensorvorrichtung geladen.

Zweckmäßigerweise wird die modifizierte Sensorkonfiguration als neue Referenzkonfiguration einem zukünftigen Vergleich mit einer ermittelten Sensorkonfiguration zugrunde gelegt. Dazu wird die modifizierte Sensorkonfiguration vorzugsweise in einer Speichervorrichtung gespeichert. Dadurch kann das Fahrgastzählsystem auch zukünftig zuverlässig überwacht werden.

Die für eine Abnahme der Zählgüte ursächlichen Effekte oder Mängel der Sensorvorrichtung lassen sich besonders gezielt und effizient beheben, indem auf Grundlage des ausgegebenen Ergebnisses des Vergleichs automatisiert eine korrigierte Sensorkonfiguration berechnet wird. Diese korrigierte Sensorkonfiguration lässt sich dann auf die Sensorvorrichtung anwenden. Zum Beispiel kann die korrigierte Sensorkonfiguration auf die Sensorvorrichtung geladen werden. Insofern kann die korrigierte Sensorkonfiguration Teil eines Software- oder Firmwareupdates sein oder dieses bilden.

In einer weiteren bevorzugten Ausführungsform wird das erfindungsgemäße Verfahren unmittelbar nach Modifikation der Sensorkonfiguration erneut ausgeführt. Dadurch lässt sich prüfen, ob die Modifikation der Sensorkonfiguration eine Abweichung der Sensorinformation von der Referenzinformation, insbesondere der Sensordaten von den Referenzdaten, beheben - und damit die ursprüngliche (ggfs. vorgegebene) Zählgüte wiederherstellen - konnte.

Es ist zweckmäßig, das erfindungsgemäße Verfahren dabei so oft auszuführen, bis keine Abweichung mehr zwischen den Sensordaten und/oder der Sensorkonfiguration einerseits und den Referenzdaten und/oder der Referenzkonfiguration andererseits mehr vorliegt. Dadurch lässt sich die originäre Funktionalität des Fahrgastzählsystems iterativ wiederherstellen. Um eine Endlosschleife zu verhindern, ist ein Abbruch der Iterationen zweckmäßig, wenn eine vorgegebene Maximalzahl an Iterationen des Verfahrens erreicht oder überschritten wird.

In einer weiteren bevorzugten Ausführungsform wird die Sensorkonfiguration der Sensorvorrichtung modifiziert, wenn sich das Fahrgastzählsystem oder das Fahrzeug in einem vorgegebenen Betriebszustand befindet. Zweckmäßigerweise ist dieser vorgegebene Betriebszustand ein Zustand, in dem keine Fahrgastzählung vorgesehen ist. Beispielsweise ist der Betriebszustand während der Fahrt zwischen zwei Haltestellen, bei geschlossener Tür oder anderweitig blockiertem Türbereich oder während einer Wartung realisiert. Dadurch können Fehler bei der Modifikation der Sensorkonfiguration und/oder eine ungewollte Unterbrechung der Fahrgastzählung vermieden werden.

In einer weiteren bevorzugten Ausführungsform wird das Ergebnis des Vergleichs in Form einer Benachrichtigung an einen Benutzer ausgegeben. Beispielsweise wird das Vergleichsergebnis über eine Benutzerschnittstelle des Fahrzeugs oder einer zentralen Leitstelle, per SMS und/oder per E-Mail ausgegeben. Der Benutzer kann dann, gegebenenfalls in Abhängigkeit des ermittelten Übereinstimmungsgrads, entscheiden, ob eine Überarbeitung des Fahrgastzählsystems notwendig oder gegenwärtig möglich ist. Bei Bedarf kann der Benutzer die Modifikation der Sensorkonfiguration veranlassen.

Ein Fahrgastzählsystem für ein Fahrzeug, insbesondere Schienenfahrzeug, gemäß einem zweiten Aspekt der Erfindung weist eine Sensorvorrichtung zum Erfassen eines Türbereichs eines Fahrzeugs und Erzeugen entsprechender Sensordaten sowie eine Sensorschnittstelle zum Auslesen einer Sensorkonfiguration der Sensorvorrichtung auf. Zudem ist eine Vergleichsvorrichtung vorgesehen zum Vergleichen der Sensordaten mit Referenzdaten, die eine Soll-Charakterisierung des Türbereichs repräsentieren, und zum Vergleichen der Sensorkonfiguration mit einer Referenzkonfiguration, die eine Soll-Charakterisierung der Sensorvorrichtung repräsentiert. Mit einer Ausgabeschnittstelle kann ein Ergebnis des Vergleichs ausgegeben werden. Das Fahrgastzählsystem erlaubt signifikante Einsparungen hinsichtlich des Zeit- und Personalaufwands beim Überprüfen seiner Konfiguration. Infolgedessen sind auch regelmäßige Überprüfungen denkbar, die das Protokollieren oder den Nachweis der ordnungsgemäßen Funktion des Fahrgastzählsystems erleichtern können.

Die Sensorvorrichtung weist vorzugsweise eine optische Sensoreinrichtung, insbesondere eine Stereokamera oder sogenannte time-of-flight-Kamera, auf. Dadurch lassen sich dreidimensionale Bilder bzw. Punktewolken des Türbereichs erzeugen. Diese Bilder oder Punktewolken können einen Vergleich der Sensordaten mit den Referenzdaten signifikant erleichtern, etwa indem spezifische mathematische Operationen oder Algorithmen anwendbar werden.

Die Vergleichsvorrichtung kann hard- und/oder softwaretechnisch ausgebildet sein. Die Vergleichsvorrichtung weist insbesondere eine Verarbeitungseinheit auf, die vorzugsweise mit einem Speicher- und/oder Bussystem daten- bzw. signalverbunden ist. Beispielsweise weist die Vergleichsvorrichtung eine Mikroprozessoreinheit (CPU) oder ein Modul einer solchen und/oder ein oder mehrere Programme oder Programmmodule auf. Die Vergleichsvorrichtung kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nichtflüchtige Medien, aufweisen. Das Programm kann derart beschaffen sein, dass es die hier beschriebenen Verfahren verkörpert bzw. auszuführen imstande ist, sodass die Vergleichsvorrichtung die Schritte solcher Verfahren ausführen und damit insbesondere ein Fahrgastzählsystem überwachen kann.

Die Ausgabeschnittstelle kann hard- und/oder softwaretechnisch ausgebildet sein. Die Ausgabeschnittstelle weist insbesondere eine Benutzeroberfläche, ein Display, einen Lautsprecher und/oder dergleichen auf. Alternativ oder zusätzlich kann die Ausgabestelle eine Verarbeitungseinheit und/oder ein Speicher- und/oder Bussystem aufweisen, welches gegebenenfalls mit der Verarbeitungseinheit daten- bzw. signalverbunden ist.

Ein Computerprogrammprodukt gemäß einem dritten Aspekt der Erfindung weist Anweisungen auf, welche ein Fahrgastzählsystem gemäß dem zweiten Aspekt der Erfindung dazu veranlassen, das Verfahren gemäß dem ersten Aspekt der Erfindung auszuführen. Insofern lassen sich mit dem Computerprogrammprodukt dieselben Vorteile erzielen, die voranstehend bereits im Zusammenhang mit dem Verfahren beschrieben wurden.

Ein computerlesbares Medium gemäß einem vierten Aspekt der Erfindung weist ein Computerprogrammprodukt gemäß dem dritten Aspekt der Erfindung auf. Insbesondere kann das Computerprogrammprodukt auf dem computerlesbaren Medium gespeichert sein.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen, zumindest teilweise schematisch:
- FIG 1: ein Beispiel eines Fahrgastzählsystems;
- FIG 2: ein Beispiel von Sensordaten und einer Sensorkonfiguration;
- FIG 3: ein Beispiel eines Verfahrens zum Überwachen eines Fahrgastzählsystems eines Fahrzeugs.

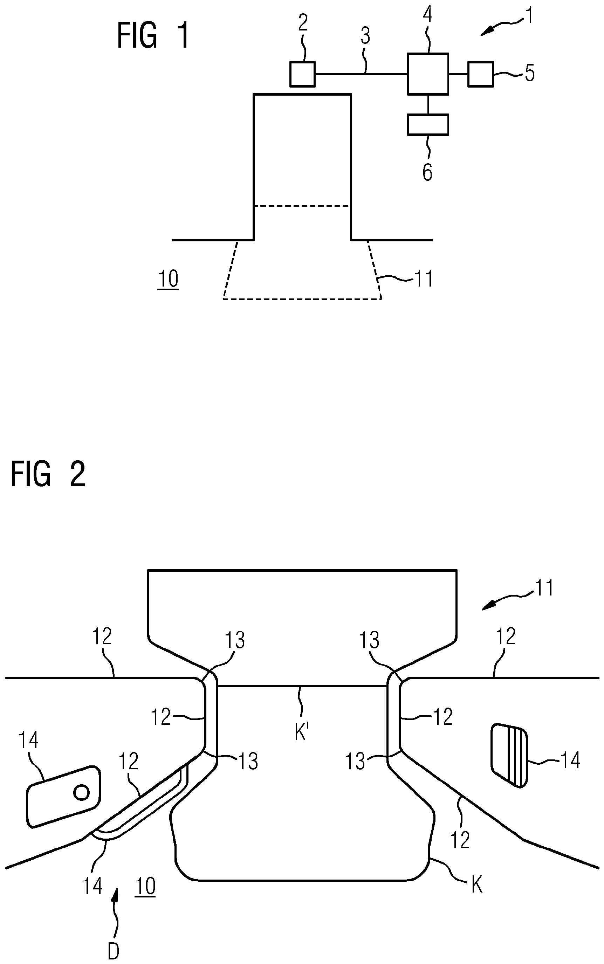

FIG 1 zeigt ein Beispiel eines Fahrgastzählsystems 1 für ein Fahrzeug 10, insbesondere ein Schienenfahrzeug. Das Fahrgastzählsystem 1 weist eine Sensorvorrichtung 2, eine Sensorschnittstelle 3, eine Vergleichsvorrichtung 4, eine Ausgabeschnittstelle 5 und eine Speichervorrichtung 6 auf, die zweckmäßigerweise untereinander signal- oder datenverbunden sind, etwa über ein entsprechendes Bussystem und/oder Netzwerk. Die Sensorvorrichtung 2 ist einem Türbereich 11 des Fahrzeugs 10 zugeordnet.

Die Sensorvorrichtung 2 ist zur Überwachung des Türbereichs 11 eingerichtet. Es ist zweckdienlich, wenn die Sensorvorrichtung 2 hierzu am oder im Fahrzeug 10, zum Beispiel oberhalb des Türbereichs 11, angeordnet ist, sodass sie Objekte, die sich innerhalb des Türbereichs 11 befinden, erfassen kann. Dabei erzeugt die Sensorvorrichtung 2 Sensordaten, die an der Vergleichsvorrichtung 4 bereitgestellt werden können. Die Sensordaten werden zweckmäßigerweise ebenso an einer nicht dargestellten Zählvorrichtung bereitgestellt, die auf Grundlage der Sensordaten eine Anzahl an ein- und aussteigenden Fahrgästen ermitteln kann.

Die Sensorvorrichtung 2 weist beispielsweise eine Stereokamera oder sogenannte time-of-flight-Kamera auf und ist vorzugsweise zur Aufnahme von Bildern des Türbereichs 11 eingerichtet. Auf den Bildern kann die Zählvorrichtung Objekte wie Kinder, Erwachsene oder Fahrräder erkennen und unterscheiden. Unabhängig davon kann die Vergleichsvorrichtung 4 charakteristische Merkmale des Türbereichs 11 erkennen, insbesondere deren Lage, Ausrichtung oder Verlauf innerhalb der Bilder und/oder relativ zueinander. Solche charakteristischen Merkmale sind beispielsweise Ecken, Kanten, Ausformungen, Bauteile und/oder dergleichen (siehe FIG 2).

Die Vergleichsvorrichtung 4 ist zum Vergleichen der Sensordaten mit Referenzdaten, welche eine Soll-Charakterisierung des Türbereichs 11 repräsentieren, eingerichtet. Die Referenzdaten können dazu in der Speichervorrichtung 6 vorgehalten sein. Die Referenzdaten bilden zweckmäßigerweise eine Soll-Lage, eine Soll-Ausrichtung und/oder einen Soll-Verlauf der charakteristischen Merkmale des Türbereichs 11 ab.

Die Vergleichsvorrichtung 4 ist zusätzlich zum Vergleichen einer Sensorkonfiguration, welche durch die Sensorschnittstelle 3 bereitstellbar ist, mit einer Referenzkonfiguration eingerichtet. Die Referenzkonfiguration kann ebenfalls in der Speichervorrichtung 6 vorgehalten sein. Die Referenzkonfiguration repräsentiert zweckmäßigerweise eine Soll-Charakterisierung der Sensorvorrichtung 2, zum Beispiel deren (interne) Signalverarbeitung.

Ein Ergebnis des von der Vergleichsvorrichtung 4 durchgeführten Vergleichs kann über die Ausgabeschnittstelle 5 ausgegeben werden. Die Ausgabeschnittstelle 5 weist zu diesem Zweck beispielsweise ein Display oder eine sonstige Anzeige im Fahrzeug 10, insbesondere in einem Führerstand des Fahrzeugs 10, auf, sodass ein Fahrzeugführer über das Vergleichsergebnis informiert werden kann. Es ist jedoch nicht zwingend, dass die Ausgabeschnittstelle 5 ausschließlich im Fahrzeug 10 angeordnet ist. Vielmehr ist es auch denkbar, dass ein Teil der Ausgabeschnittstelle 5 landseitig vorgesehen ist. Beispielsweise kann das Vergleichsergebnis auch in einer Leitstelle oder dergleichen an einen Benutzer ausgegeben werden. Alternativ oder zusätzlich kann das Vergleichsergebnis als Benachrichtigung über ein (Kommunikations-)Netzwerk, etwa als E-Mail oder SMS, versandt werden.

Ähnlich wie die Ausgabeschnittstelle 5 muss auch die Vergleichsvorrichtung 4 und/oder die Speichervorrichtung 6 nicht zwingend im Fahrzeug 10 angeordnet sein. Vielmehr ist es denkbar, eine zentrale Vergleichsvorrichtung 4, etwa in der Leitstelle, vorzusehen. Eine solche Vergleichsvorrichtung 4 kann dann besonders leicht Sensordaten von Sensorvorrichtungen 2 in einer Vielzahl von verschiedenen Fahrzeugen 10 verarbeiten.

Auch wenn im Beispiel von FIG 1 nur eine Sensorvorrichtung 2 gezeigt ist, kann das Fahrgastzählsystem 1 selbstverständlich eine Mehrzahl an Sensorvorrichtungen 2 aufweisen. Zweckmäßigerweise ist jede dieser Sensorvorrichtungen 2 jeweils einer Tür bzw. einem Türbereich 11 des Fahrzeugs 10 zugeordnet. Vorzugsweise sind für jede der Sensorvorrichtungen 2 spezifische Referenzdaten und eine spezifische Referenzkonfiguration vorgehalten.

Die Sensorvorrichtung 2 und die Vergleichsvorrichtung 4 können - auch wenn dies in FIG 1 anders dargestellt ist - auch in einem Gerät integriert sein. Beispielsweise können die Sensorvorrichtung 2 und die Vergleichsvorrichtung 4 auf derselben Platine ausgebildet bzw. durch dieselbe Platine realisiert sein. Insofern kann die Sensorschnittstelle 3 eine interne Schnittstelle sein.

FIG 2 zeigt ein Beispiel von Sensordaten D und einer Sensorkonfiguration K. Die Sensorgraden D liegen hierbei in Form eines Bilds eines Türbereichs 11 eines Fahrzeugs 10 vor, das beispielsweise mithilfe einer als Kamera ausgebildeten Sensorvorrichtung (siehe FIG 1) aufgenommen ist. Die Sensorkonfiguration K charakterisiert hier rein beispielhaft einen Abschnitt innerhalb des Türbereichs 11, in dem erkannte Fahrgäste von einem Fahrgastzählsystem gezählt werden. Abhängig davon, in welche Richtung die erkannten Fahrgäste die Linie K` überqueren, können sie als ein- oder aussteigender Fahrgast gezählt werden.

Von einer Vergleichsvorrichtung (siehe FIG 1) können die Sensordaten D mit Referenzdaten, die zweckmäßigerweise ebenfalls in Form eines Bilds des Türbereichs 11 vorliegen, verglichen werden. Hierbei werden beispielsweise charakteristische Merkmale des Fahrzeugs 10, insbesondere des Türbereichs 11, wie Kanten 12, Ecken 13, Bauteile 14 und/oder dergleichen identifiziert. Insbesondere können diese charakteristischen Merkmale durch dedizierte, d. h. speziell zu diesem Zweck vorgesehene, Bauteile verkörpert werden, etwa Aufkleber mit speziellen Mustern zur vereinfachten Erkennung. Dadurch lassen sich geometrische Eigenschaften wie die Lage und/oder Anordnung, die Ausrichtung und/oder der Verlauf dieser Merkmale 12, 13, 14 in dem Bild mit den entsprechenden Eigenschaften in den Referenzdaten vergleichen und Abweichungen ermitteln. Insbesondere kann so ermittelt werden, ob die Perspektive, aus welcher die Sensorvorrichtung den Türbereich 11 erfasst, mit einer Perspektive der Referenzdaten übereinstimmt und gegebenenfalls, wie stark die Abweichung ist.

In ähnlicher Weise kann mithilfe der Vergleichsvorrichtung die Sensorkonfiguration K mit einer Referenzkonfiguration verglichen werden. Beispielsweise werden hierbei die Ausrichtung und/oder Lage des Abschnitts innerhalb des Türbereichs 11, in dem erkannte Fahrgäste gezählt werden, und/oder der Linie K` mit entsprechenden Eigenschaften in der Referenzkonfiguration verglichen. Weitere in FIG 2 nicht dargestellte Eigenschaften, welche Teil der Sensorkonfiguration K sein können, betreffen etwa eine oder mehrere Betriebsspannungen der Sensorvorrichtung, eine sensorinterne Signal(vor-)verarbeitung oder -verstärkung und/oder dergleichen.

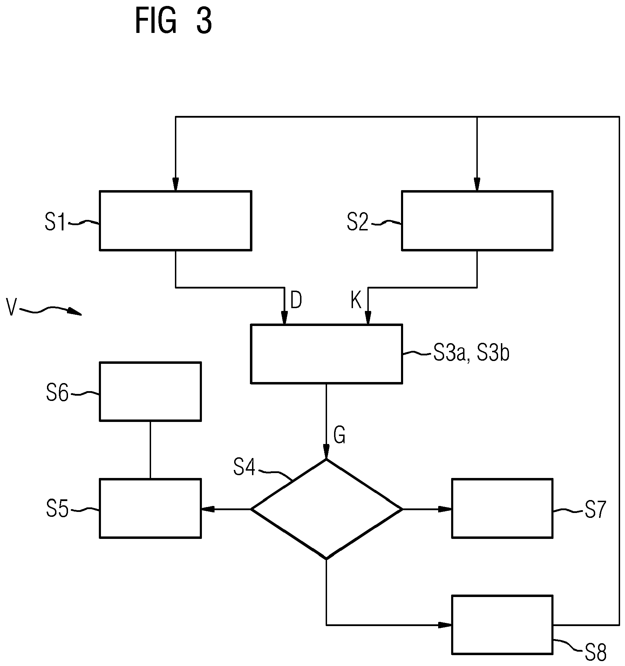

FIG 3 zeigt ein Beispiel eines Verfahrens V zum Überwachen eines Fahrgastzählsystems eines Fahrzeugs, insbesondere Schienenfahrzeugs.

In einem Verfahrensschritt S1 wird ein Türbereich des Fahrzeugs mithilfe einer Sensorvorrichtung des Fahrgastzählsystems erfasst und entsprechende Sensordaten D erzeugt. Beispielsweise kann ein zwei- oder dreidimensionales Bild des Türbereichs aufgenommen werden. In einem weiteren Verfahrensschritt S2, der unabhängig vom Verfahrensschritt S1 sein kann, wird eine Sensorkonfiguration K der Sensorvorrichtung ermittelt. Beispielsweise können Kennzahlen der Sensorvorrichtung, die deren Funktion oder deren Datenerzeugung beeinflussen, über eine entsprechende Sensorschnittstelle ausgelesen werden.

Die Sensordaten D und die Sensorkonfiguration K werden zweckmäßigerweise zur Verarbeitung an eine Vergleichsvorrichtung übermittelt. Dies kann rein fahrzeugseitig erfolgen, zum Beispiel über ein fahrzeuginternes Bussystem oder Netzwerk. Alternativ kann die Übermittlung aber auch zumindest teilweise drahtlos über eine entsprechende (Kommunikations-)Verbindung erfolgen, wenn die Vergleichsvorrichtung als zentrale landseitige Vorrichtung ausgebildet ist.

In einem weiteren Verfahrensschritt S3a werden die Sensordaten mit Referenzdaten, welche eine Soll-Charakterisierung des Türbereichs repräsentieren, verglichen. Zu diesem Zweck können die Referenzdaten aus einer entsprechenden Speichervorrichtung geladen werden.

Beim Vergleichen der Sensordaten D mit den Referenzdaten wird beispielsweise ermittelt, zu welchem Grad die Geometrie des Türbereichs, wie sie durch die Sensordaten D charakterisiert ist, mit der Geometrie des Türbereichs, wie sie durch die Referenzdaten charakterisiert ist, übereinstimmt. Zum Beispiel kann die Lage oder Ausrichtung von charakteristischen Merkmalen des Fahrzeugs im Türbereich miteinander verglichen werden. Daraus kann abgeleitet werden, ob und/oder wie stark sich die Perspektive, aus welcher der Türbereich erfasst wurde, zwischen den Sensordaten D und den Referenzdaten geändert hat.

In einem weiteren Verfahrensschritt S3b wird, vorzugsweise unabhängig vom Verfahrensschritt S3a, auch die Sensorkonfiguration K mit einer Referenzkonfiguration, die eine Soll-Charakterisierung der Sensorvorrichtung repräsentiert, verglichen. Hierbei kann insbesondere geprüft werden, ob Leistungsmerkmale des Sensors oder Eigenschaften seiner Soft- oder Firmware bestimmten Vorgaben entsprechen.

Im Rahmen des Verfahrensschrittes S3a, S3b wird vorzugsweise ein Übereinstimmungsgrad G ermittelt. Der Übereinstimmungsgrad G ergibt sich zum Beispiel direkt aus beiden oder zumindest einem der Vergleiche. Der Übereinstimmungsgrad G kann insbesondere ein Ergebnis zumindest eines der Vergleiche sein. Der Übereinstimmungsgrad G kann sich auch zusammensetzen aus beispielsweise einem perspektivischen Übereinstimmungsgrad, der im Verfahrensschritt S3a ermittelt wird, und einem Konfigurationsübereinstimmungsgrad, der im Verfahrensschritt S3b ermittelt wird. Der Übereinstimmungsgrad G gibt zweckmäßigerweise die Stärke der Abweichung von den Sensordaten D und/oder der Sensorkonfiguration K zu den Referenzdaten bzw. der Referenzkonfiguration an.

In einem optionalen Verfahrensschritt S4 wird geprüft, ob der Übereinstimmungsgrad G einen vorgegebenen Übereinstimmungsschwellenwert erreicht oder unterschreitet. In Abhängigkeit eines Ergebnisses der Prüfung kann wenigstens eine von mehreren Schnittstellen ausgewählt und ein Ergebnis des Vergleichs aus Verfahrensschritt S3a, S3b, insbesondere der Übereinstimmungsgrad G, über die ausgewählte(n) Schnittstelle(n) ausgegeben werden.

Beispielsweise wird das Vergleichsergebnis in einem weiteren Verfahrensschritt S5 protokolliert, d. h. an eine Speichervorrichtung ausgegeben. Verfahrensschritt S5 wird zweckmäßigerweise ausgeführt, wenn der Übereinstimmungsgrad G den Schwellenwert überschreitet. Das protokollierte Vergleichsergebnis kann in einem weiteren Verfahrensschritt S6 zu einem späteren Zeitpunkt zur Zertifizierung des Fahrgastzählsystems genutzt werden, d. h. zum Nachweis seiner einwandfreien bzw. vorgegebenen Funktion.

Alternativ oder zusätzlich kann auf Grundlage des Vergleichsergebnisses, insbesondere wenn der Übereinstimmungsgrad G den Schwellenwert erreicht oder unterschreitet, in einem weiteren Verfahrensschritt S7 ein Benutzer benachrichtigt werden. Zu diesem Zweck wird das Vergleichsergebnis vorzugsweise über eine Benutzerschnittstelle ausgegeben.

Alternativ oder zusätzlich zur Ausgabe des Vergleichsergebnisses in Verfahrensschritt S7 kann in einem weiteren Verfahrensschritt S8 die Sensorkonfiguration K der Sensorvorrichtung modifiziert werden. Beispielsweise wird eine korrigierte Sensorkonfiguration ermittelt und auf die Sensorvorrichtung angewandt. Vorzugsweise wird unmittelbar nach der Modifikation der Sensorkonfiguration K das Verfahren V, insbesondere die Verfahrensschritte S1 und S2, erneut ausgeführt, um die Sensordatenerzeugung der Sensorvorrichtung auf Verbesserung prüfen zu können. Insofern ist eine iterative Annäherung an eine gewünschte Sensorkonfiguration und eine damit verbundene Zählgüte möglich.

Durch die Modifikation der Sensorkonfiguration K ist es gegebenenfalls möglich, Alterungserscheinungen der Sensorvorrichtung und/oder des Fahrzeugs zumindest teilweise zu kompensieren. Beispielsweise kann selbst eine geringfügige Änderung der Position und/oder Ausrichtung der Sensorvorrichtung relativ zum Türbereich, etwa durch altersbedingtes Sacken einer die Sensorvorrichtung tragenden Fahrzeugkomponente oder Neumontage selbst innerhalb strenger Toleranzgrenzen, zu einer Abnahme der Zählgüte führen. Durch Neu- oder Umkonfigurieren der Sensorvorrichtung in Verfahrensschritt S8, etwa durch Anpassen eines Abschnitts, in dem erkannte Fahrgäste gezählt werden (siehe FIG 2), lässt sich die ursprüngliche oder zumindest eine vorgegebene (Mindest-)Zählgüte wiederherstellen.

Das beschriebene Verfahren V ist beispielsweise mit dem im Zusammenhang mit FIG 1 beschriebenen Fahrgastzählsystem ausführbar.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (V) zur automatisierten Überwachung von Fahrgastzählsystemen in Fahrzeugen, insbesondere Schienenfahrzeugen, mit den Schritten:
- Erfassen (S1) eines Türbereichs (11) eines Fahrzeugs (10) mithilfe einer Sensorvorrichtung (2) eines Fahrgastzählsystems (1) und Erzeugen entsprechender Sensordaten (D);
- Ermitteln (S2) einer Sensorkonfiguration (K) der Sensorvorrichtung (2);
- Vergleichen (S3a) der Sensordaten (D) mit Referenzdaten, die eine Soll-Charakterisierung des Türbereichs (11) repräsentieren, und Vergleichen (S3b) der Sensorkonfiguration (K) mit einer Referenzkonfiguration, die eine Soll-Charakterisierung der Sensorvorrichtung (2) repräsentiert; und
- Ausgabe (S5, S7, S8) eines Ergebnisses des Vergleichs.

2. Verfahren (V) nach Anspruch 1, wobei mithilfe der Sensorvorrichtung (2) ein Bild des Türbereichs (11) erzeugt und das Bild mit einem Referenzbild, welches den Türbereich (11) aus einer vorgegebenen Perspektive abbildet, verglichen wird.

3. Verfahren (V) nach Anspruch 2, wobei beim Vergleichen des Bilds mit dem Referenzbild ein perspektivischer Übereinstimmungsgrad des Bilds mit dem Referenzbild ermittelt wird.

4. Verfahren (V) nach einem der vorangehenden Ansprüche, wobei die Sensordaten (D) und die Sensorkonfiguration (K) fahrzeugseitig bereitgestellt und an eine zentrale, landseitige Vergleichsvorrichtung (4) übermittelt werden, wo der Vergleich vorgenommen wird.

5. Verfahren (V) nach einem der vorangehenden Ansprüche, wobei das ausgegebene Ergebnis des Vergleichs gespeichert (S5) und einer Zertifizierung des Fahrgastzählsystems zugrunde gelegt (S6) wird.

6. Verfahren (V) nach einem der vorangehenden Ansprüche, wobei beim Vergleichen der Sensordaten (D) und/oder der Sensorkonfiguration (K) einerseits mit den Referenzdaten bzw. der Referenzkonfiguration andererseits ein Übereinstimmungsgrad (G) ermittelt und zumindest als Teil des Ergebnisses des Vergleichs ausgegeben wird.

7. Verfahren (V) nach Anspruch 6, wobei geprüft wird, ob der ermittelte Übereinstimmungsgrad (G) einen vorgegebenen Übereinstimmungsschwellenwert erreicht oder unterschreitet, und zur Ausgabe des Ergebnisses des Vergleichs wenigstens eine von mehreren Schnittstellen (5) auf Grundlage eines Ergebnisses der Prüfung ausgewählt (S4) wird.

8. Verfahren (V) nach einem der vorangehenden Ansprüche, wobei auf Grundlage des ausgegebenen Ergebnisses des Vergleichs die Sensorkonfiguration (K) der Sensorvorrichtung (2) modifiziert und die modifizierte Sensorkonfiguration als Referenzkonfiguration einem zukünftigen Vergleich mit einer ermittelten Sensorkonfiguration zugrunde gelegt wird.

9. Verfahren (V) nach Anspruch 8, wobei auf Grundlage des ausgegebenen Ergebnisses des Vergleichs automatisiert eine korrigierte Sensorkonfiguration berechnet und auf die Sensorvorrichtung (2) angewandt (S8) wird.

10. Verfahren (V) nach Anspruch 8 oder 9, wobei das Verfahren unmittelbar nach Modifikation der Sensorkonfiguration erneut ausgeführt wird.

11. Verfahren (V) nach Anspruch 10, wobei das Verfahren so oft ausgeführt wird, bis keine Abweichung mehr zwischen den Sensordaten (D) und/oder der Sensorkonfiguration (K) einerseits und den Referenzdaten und/oder der Referenzkonfiguration andererseits mehr vorliegt oder eine vorgegebene Maximalzahl an Iterationen des Verfahrens erreicht oder überschritten wird.

12. Verfahren (V) nach einem der Ansprüche 8 bis 11, wobei die Sensorkonfiguration (K) der Sensorvorrichtung (2) modifiziert wird, wenn sich das Fahrgastzählsystem (1) oder das Fahrzeug (10) in einem vorgegebenen Betriebszustand befindet, in dem keine Fahrgastzählung vorgesehen ist.

13. Verfahren (V) nach einem der vorangehenden Ansprüche, wobei das Ergebnis des Vergleichs in Form einer Benachrichtigung an einen Benutzer ausgegeben (S7) wird.

14. Fahrgastzählsystem (1) für ein Fahrzeug (10), insbesondere Schienenfahrzeug, mit
- einer Sensorvorrichtung (2) zum Erfassen eines Türbereichs (11) eines Fahrzeugs (10) und Erzeugen entsprechender Sensordaten (D),
- einer Sensorschnittstelle (3) zum Ermitteln einer Sensorkonfiguration (K) der Sensorvorrichtung (2),
- einer Vergleichsvorrichtung (4) zum Vergleichen der Sensordaten (D) mit Referenzdaten, die eine Soll-Charakterisierung des Türbereichs (11) repräsentieren, und zum Vergleichen der Sensorkonfiguration (K) mit einer Referenzkonfiguration, die eine Soll-Charakterisierung der Sensorvorrichtung (2) repräsentiert, und
- einer Ausgabeschnittstelle (5, 6) zum Ausgeben eines Ergebnisses des Vergleichs.

15. Computerprogrammprodukt aufweisend Anweisungen, welche ein Fahrgastzählsystem (1) nach Anspruch 14 dazu veranlassen, das Verfahren (V) nach einem der Ansprüche 1 bis 13 auszuführen.
